# EUROPEAN PATENT APPLICATION

(11) **EP 3 812 419 A1**
(43) Date of publication of application: **28.04.2021**
(21) Application number: 19204768.6
(22) Date of filing: 23.10.2019
(51) Int. Cl.: C08J 9/00, C08J 9/30, C08L 1/00, C08L 89/00, C08L 97/02, D21F 11/00, D21H 21/56, C08J 9/12

(54) **MICROFIBRILLATED CELLULOSE-LOADED FOAM, METHOD OF PRODUCING SUCH FOAM AND USE OF SUCH A FOAM**

(71) Applicant: Weidmann Holding AG, 8640 Rapperswil (CH); ETH Zürich, 8092 Zürich (CH)
(72) Inventor: WINDHAB, Erich Josef, 8261 Hemishofen (CH); WEMMER, Judith, 8048 Zürich (CH); TRUNIGER, Stefan, 8330 Pfäffikon ZH (CH); PENEDER, Nadine, 8952 Schlieren (CH)
(74) Representative: Rutz, Andrea

(57) **Abstract**

A microfibrillated cellulose-loaded foam is indicated, comprising microfibrillated cellulose, at least one thickening agent and/or at least one adhesive biopolymer. Furthermore, a method for producing such a microfibrillated cellulose-loaded foam and a use of such a foam are provided.

## Description

### TECHNICAL FIELD

The present invention relates to a fiber-reinforced cellulose foam, a method of producing such foam and the application of such a foam.

### PRIOR ART

Cellulose is one of the most abundant material on earth. Foams based on cellulose fibres have gained considerable interest due to their properties. In particular, cellulose fibre-based foams may be an environmental friendly alternative to existing polymeric foams.

However, methods for producing cellulose based foams are rather time consuming and do not allow for high throughput industrial production. In order to allow high throughput production several factors have to be considered, e.g. a drying step. Since continuous cellulose foam production has to include drying of the foamed product, high solids fraction containing cellulose suspensions are most desirable to be foamed. However, foaming technologies for cellulose fiber concentrations ≥ 1 %wt. by direct addition of environmentally friendly gases as foaming agents remained challenging. This is where the invention provides novel access.

WO 02/055774 A2 describes the formation of cellulosic foams in order to produce a cellulosic web with crosslinked cellulosic fibers and at the same time maintaining the structural integrity. The described method makes use of high air content in the foam to produce a product that does not require a foraminate support through which free liquid is drained from the web.

WO 2015/036659 A1 describes a method of forming a molded fibrous product by using a suspension of natural fibers in combination with synthetic fibers. Synthetic fibers are needed in order to improve the mechanical properties of the fibrous material.

WO 2015/066806 describes a method of making a natural fibrous ultra-low-density composite (ULDC) using a novel continuous overflow foaming process with a specialized apparatus. The ULDC comprises cellulose filaments, which have been produced from wood or plant fibers, and pulp. However, the final composite foam is drained on a drainage table allowing only the production of flat objects such as mats and panels.

Thus, cellulosic based foams described in the state of the art either allow only the formation of flat, two-dimensional objects, since a drainage step is required or, if additional three dimensional objects want to be obtained, need the addition of synthetic fibers in order to provide the required stiffness and mechanical strength.

### SUMMARY OF THE INVENTION

It is thus an object of the present invention to provide a microfibrillated cellulose-loaded foam which can be molded into any desired shape, which is environmentally friendly and can be produced in an economical manner. It is further an object of the present invention to provide a process of forming such foams in an economic manner.

At least a part of these objectives have been solved by the subject-matter of the independent claims. Further preferred embodiments are provided in the dependent claims.

A first aspect of the invention is a microfibrillated cellulose-loaded foam comprising microfibrillated cellulose, at least one thickening agent and/or at least one adhesive biopolymer.

By microfibrillated cellulose-loaded foam it is meant, that solid material of the foam is predominantly microfibrillated cellulose.

It has been surprisingly found that a varying microfibrillated cellulose content can be easily foamed when at least one thickening agent is present. The thickening agent can be a fully synthetic, a semi-synthetic or a natural thickening agent. Fully synthetic thickening agents are for example polyvinyl alcohol, polyacrylic acid, polyacrylamide or polyethylene glycol. Semi-synthetic thickening agents may have a biological origin but may have been modified, examples are hydroxy ethyl cellulose, hydroxy propyl methyl cellulose and carboxy methyl cellulose. Natural thickening agents such as starch, gelatin, casein or glucomannane may also be possible. A biodegradable thickening agent is preferred. Additionally or alternatively, at least one biopolymer acting as an adhesive when heat-activated is present. Preferably the biopolymer is a protein. This allows the production of a lightweight foam with a high microfibrillated cellulose content. The foam can be produced with conventional extruders. Thus, already available apparatuses do not need any or only marginal adjustments which simplifies the industrial implementation of the production of such foams.

The raw material for microfibrillated cellulose (MFC) may be bleached softwood pulp or any other suitable source, such as annual plants. Preferably, the raw material has a cellulose content of more than 85 %, a hemicellulose content of between 5 and 15 % and a lignin content of less than 1 %. MFC can be obtained by mechanical treatment with or without enzymatic or chemical treatment as known in the art. Preferably, the MFC used in accordance with the present invention has a fiber length in the range of 20 µm to 600 µm, more preferably in the range of 80 to 300 µm and most preferably in the range of 100 to 200 µm. The particle ratio with fiber length smaller or equal to 200 µm is preferably at least 50 %, more preferably at least 65 % and most preferably more than 80 %, determined according to TAPPI-T271. The particle ratio with fiber length larger or equal to 500 µm is preferably less or equal to 6 %, more preferably less or equal to 4 % and most preferably less or equal to 2 %. Thus, larger particles are tolerable. Preferably, the MFC used in accordance with the present invention, when present in a watery suspension at a dry content of 2 wt.%, has a viscosity in the range of 0.02 - 0.12 Pas, more preferably in the range of 0.02-0.06 Pas, at a shear rate of 1000 1/s at room temperature.

At least one thickening agent is added in order to allow shearing of MFC agglomerates which, in turn, provides a more homogenous distribution of MFC (solid phase) and liquid phase. A more homogenous distribution of solid and liquid phase improves the water retention value which is a crucial factor in order to prevent any phase separation during manufacturing process. Flow properties are improved.

In addition, the biopolymer improves the foam bubble size towards smaller bubbles and stabilizes the bubbles to maintain the integrity of the foam structure.

Preferably, the microfibrillated cellulose-loaded foam before drying has a concentration of microfibrillated cellulose of between 2 to 20 wt. %, preferably 4 to 14 wt. % and most preferably between 7 and 10 wt. % based on the total weight of the foam. The thickening agent may have a concentration of between 0.01 and 10 wt. %, preferably 0.5 to 5 wt. % and most preferably between 0.5 and 2 wt. % based on the total weight of the foam. The biopolymer may have a concentration of 0.05 to 10 wt. %, preferably between 1 to 5 wt. % and most preferably 2 % based on the total weight of the foam.

Most preferably, the ratio between microfibrillated cellulose, thickening agent and adhesive biopolymer is 20: 1.5 : 2, preferably 15 : 1 : 1.5, most preferably 10 : 1: 1, even more preferably 8 : 1 : 1 and most preferably 8.4 : 0.6 : 1.

The concentrations and ratios as described above allow to apply foaming technologies by direct addition of environmental friendly gases as foaming agents even to cellulose fiber concentrations ≥ 1 wt.%.

The microfibrillated cellulose foam according to the invention contains 5 - 95 vol% of gas, preferably 30-80% and most preferably 50-60 vol%.

Advantageously, the wet foam is fixated into a dry solid foam, in particular into a microwave-assisted convection dried foam or a microwave-assisted vacuum dried foam.

Microwave-assisted drying allows a volumetric and homogeneous energy input into the foam, which reduces collapse and densification. Thus, the dry foam shows an even pore size distribution and shows a high mechanical strength.

Advantageously, the dried microfibrillated cellulose-loaded foam has a density of between 0.05 and 0.35 g/cm³, preferably between 0.1 and 0.3 g/cm³ and most preferably between 0.15 and 0.25 g/cm³.

Thus, light weight environmentally friendly foams can be produced which show a remarkable mechanical stability.

Preferably, the thickening agent is chosen from the group consisting of cellulose derivative, protein, polysaccharide, polyvinyl alcohol or polyethylene glycol or combinations thereof, preferably hydroxy propyl cellulose, hydroxyl propyl methyl cellulose (HPMC) and/or polyethylene glycol (PEG).

The thickening agent and/or the biopolymer may act as a surface-active agent. Surface-active agents promote the formation of small bubbles in the foam.

The at least one biopolymer may be a protein, preferably egg white protein. Other proteins in their partially native state and the ability to denature upon heat treatment could be also used as "adhesive polymer connector components" between the cellulose fibers at their contact points/regions in the foam matrix / foam lamellae.

The microfibrillated cellulose-loaded foam may comprise further additives. Further additives may be an adhesive, an adhesive hardener, a sizing agent, a mold resistant compound, a fiber decay resistant compound, a heat resistant compound, an electricity resistant compound, an acid resistant compound, a smoke resistant compound or combinations thereof.

The sizing agent can be alkyketene dimer (AKD).

Inorganic compounds such as zinc borate, cupric carbonate (CuCO₃), disodium octaborate, cupric sulfate (CuSO₄), boric acid, perlite, silicon dioxide (SiO₂), potassium sulfate (K₂SO₄), hydrated magnesium silicate (talc) or combinations thereof may be added. Talc, for example has heat resistant, electricity resistant and acid resistant properties.

By adding further additives, the properties can be tuned according to the desired application of the foam.

Another aspect of the invention relates to a method for producing a microfibrillated cellulose-loaded foam, preferably a foam as previously described. The method comprises the following steps:
a) Providing a concentrate comprising microfibrillated cellulose,
b) Feeding the concentrate into a foaming apparatus,
c) Adding a liquid to the concentrate to obtain a suspension,
d) Agitating and pressurizing the suspension in the foaming apparatus,
e) Sparging a gas into the suspension
f) Discharging the suspension through an outlet in the foaming apparatus to obtain a microfibrillated cellulose-loaded foam.

The microfibrillated cellulose-loaded foam additionally comprises a thickening agent and/or adhesive biopolymer.

Preferably, the concentrate defined in step a) refers to a mixture in a wet powder to suspension state. Advantageously, the solid content of MFC is in the range of 10 to 50 wt.%, preferably 20 to 40 wt.%, and most preferably 20 to 30 wt.% in the concentrate. The liquid component may be water. Preferably, the MFC used in step a) has a fiber length in the range of 20 µm to 600 µm, more preferably in the range of 80 to 300 µm and most preferably in the range of 100 to 200 µm. The particle ratio with fiber length smaller or equal to 200 µm is preferably at least 50 %, more preferably at least 65 % and most preferably more than 80 %, determined according to TAPPI-T271. The particle ratio with fiber length larger or equal to 500 µm is preferably less or equal to 6 %, more preferably less or equal to 4 % and most preferably less or equal to 2 %. Thus, larger particles are tolerable. Preferably, at 2 % the MFC has a viscosity in the range of 0.01 - 0.12 Pas, more preferably in the range of 0.02-0.06 Pas, at shear rate of 1000 1/s.

Preferably the adhesive biopolymer is added to the concentrate before step b). The biopolymer may have a concentration of 0.05 to 10 wt. %, preferably between 1 to 5 wt. % and most preferably 2 wt. % based on the total weight of the concentrate. The biopolymer may be a protein. Preferably, the protein is egg white protein.

The foaming apparatus in step c) can be an extruder, preferably a twin-screw extruder.

Preferably, the thickening agent is added to the concentrate together with the liquid in step c).

The liquid in step c) may for example be water or ethanol. The liquid and the thickening agent can be added separately or as a pre-mixed mixture to the foaming apparatus. The thickening agent used in step c) may have a concentration of between 0.01 and 10 wt. %, preferably 0.5 to 5 wt. % and most preferably between 0.5 and 2 wt. % based on the total weight of the extrudate. If added as a pre-mixed mixture, the amount of thickening agent in the liquid is between 0.5 and 2 %, preferably 1 %. Alternatively, ethanol can be added in step a) to the concentrate. Preferably, the suspension obtained in step c) has a viscosity of > 200 mPas, preferably between 400 and 600 mPas.

Preferably, the thickening agent is chosen from the group consisting of cellulose derivative, protein, polysaccharide, polyvinyl alcohol or polyethylene glycol or combinations thereof, preferably, hydroxy propyl cellulose (HPC) hydroxyl propyl methyl cellulose (HPMC) and/or polyethylene glycol (PEG).

The thickening agent may be surface-active agent. It may be possible to add water with 1 wt. % HPMC to the foaming apparatus to obtain a suspension with a viscosity of 200 to 400 mPas. Water with a 25 % PEG solutions provides a similar viscosity as 1 wt.% HPMC. Alternatively a 1/3 1 wt. % HPC solution in ethanol and a 2/3 1 wt. % HPMC solution in water may be used.

The thickening agent provides a reasonable viscosity without the risk of phase separation within the foaming apparatus, in particular the extruder.

Preferably, the liquid is added in split streams. Even more preferably, the liquid stream can be split up into two or three liquid streams. The liquid stream may even be split into more than three streams. The split up improves the robustness of the process.

In step d), the suspension is agitated and pressurized in the foaming apparatus. Since the suspension has a high viscosity, the agitating step can be a kneading step. When using a twin screw extruder, agitation can be performed by narrow gap mixing elements and using a rotational speed as low as 10 to 200 U/min, preferably 40 to 60 U/min, in order to minimize viscous energy dissipation rates while achieving a sufficient mixing homogeneity.

The gas in step e) is preferably carbon dioxide (CO₂). The gas may be charged to the foaming apparatus in an amount of 0.05 - 0.5 wt.% based on the suspension flow rate. The gas may also be compressed air, nitrogen or argon.

The gas in step e) can be added in its sub- or supercritical state, which facilitates the dissolution and/or dispersion of the gas in the microfibrillated cellulose-loaded paste-like fluid matrix.

The outlet of the foaming apparatus may be a nozzle of an extruder. Preferably, the nozzle has an orifice that is adapted to allow pressure build-up in the extruder of 5-100 bar, preferably 10-60 bar, most preferably 20-30 bar.

If the foaming apparatus is an extruder, a particularly preferred extrusion process can be described as follows: The concentrate with optionally the biopolymer is fed to the extruder. Then, the liquid is added to the mixture, optionally with the thickening agent, to obtain a continuous phase of a viscous suspension comprising 7 to 20 wt. %, preferably 7-14 wt.% and most preferably 8 to 10 wt.%, microfibrillated cellulose corresponding to a zero-shear viscosity of 10⁴ to 10⁶ Pas. Gas is sparged into the apparatus and thus into the suspension. The extruder allows to apply high shear and thus mixing and dissolving gas in the viscous suspension. The gas volume fraction can be tailored through the gas flow rate which is in the range of 0.05 -0.5 wt.% of the flow rate of the suspension. By adding the gas, a foam is formed in the extruder, composed of up to 70 vol % gas, preferably between 50 and 65 vol%. The gas is preferably dissolved in the aqueous and/or ethanol phase and nucleates at the extruder outlet. The thickening agent increases the surface area of the microfibrillated cellulose resulting in a finer mesh size in the continuous phase. A surface-active thickening agent promotes the formation of smaller foam bubbles and a more homogenous distribution of bubbles. The adhesive biopolymer increases the gas holding capacity of the foam while wet and allows the production of foams with high gas volume fractions and good stability.

The foam can be casted into molds of any desired shaped, allowing tailoring of the structure according to the desired application.

Preferably, the foam is fixated and solidified by drying. The drying step may be either freeze-drying or heat drying. Heat drying is preferred. The heat drying may be microwave-assisted convection drying or microwave-assisted vacuum drying. The microwave heating is preferably conducted such that an even temperature increase over the entire sample is obtained, meaning at the border and center of the sample. Taking a 100 mL sample an even temperature increase would be obtained using a temperature of 100 °C and 100 W. Heating is preferably performed over a time range of 5 to 20 minutes, preferably 10 min. Thus, the foam is evenly and slowly heated, leading to a slow evaporation of the water or ethanol and a controlled expansion of the foam. At the same sufficient time is provided to the protein to denature. This, in turn, assures the integrity of the pores. A fast evaporation of the water or ethanol molecules would cause a disruption of the pores and a collapse of the foam.

The dried product provides a highly stable, lightweight material, dominated by a fiber network from renewable resources with a bulk density of preferably between 0.05 and 0.35 g/cm³, more preferably between 0.1 and 0.3 g/cm³ and most preferably between 0.15 and 0.25 g/cm³.

The expansion rate upon drying may be between 0.6 and 1.2, preferably between 0.8 and 1.2 and most preferably between 1.0 and 1.2 compared to the non-expanded foam. Wherein an expansion rate of 0.6 means, that the foam has a shrinkage of 40 %. A high shrinkage may be an advantage if higher densities are desired. An expansion rate of 1 is equal to the size of the foam before drying. An expansion rate of 1.2 accounts for a 20 % increase of the foam size. A higher expansion rate leads to a lower density of the foams especially suitable for lightweight products.

Thus, the density can be tuned according to the desired need of the foam.

Alternative drying techniques would include supercritical CO₂ drying and freeze drying. However, on industrial scale these drying methods would not be economic.

Further additives may be added to the suspension. Further additives may either be added in advance to the powder composition and/or supplied to the suspension in the foaming apparatus. Further additives may be an adhesive, an adhesive hardener, a sizing agent, a mold resistant compound, a fiber decay resistant compound, a heat resistant compound, an electricity resistant compound, an acid resistant compound, a smoke resistant compound or combinations thereof.

The sizing agent can be alkyketene dimer (AKD).

Inorganic compounds such as zinc borate, cupric carbonate (CuCO₃), disodium octaborate, cupric sulfate (CuSO₄), boric acid, perlite, silicon dioxide (SiO₂), potassium sulfate (K₂SO₄), hydrated magnesium silicate (talc) or combinations thereof may be added. Talc, for examples has heat resistant, electricity resistant and acid resistant properties. For example, talc particles in ethanol may be added to the powder composition in step a). The talc particles in ethanol can be added in a concentration of 0.5 - 2 %.

Thus, the properties of the foam can be tuned according to the desired application and provides a variety of possible uses of the produced foams.

It is a further aspect of the invention to provide a use of a foam, preferably of a foam as previously described. The foam may be used as insulation material, such as thermal and/or electrical insulation material, as packing material or as cushioning material. It is also conceivable that the foam is used as construction element, where light weight construction elements are needed.

A further aspect of the invention relates to a dry microfibrillated cellulose-loaded foam obtainable by a method as previously described.

### SHORT DESCRIPTION OF THE FIGURES

The invention will be described in more detail by the following exemplary embodiments in figures 1 to 3B, without the invention being restricted to these embodiments. Same reference signs in the embodiment indicate same or similar objects. It shows:
- Fig. 1:: an exemplary process according to the invention;
- Fig. 2A:: compares the gas volume fraction and pore distribution at different formulations;
- Fig. 2B:: shows micro-CT images of the foams after fixation through freeze-drying according to figure 2A;
- Fig. 3A:: shows an image of a microwave-convection dried foam in a total perspective; and
- Fig. 3B:: shows a zoom of the foam of figure 3A.

### DESCRIPTION OF PREFERRED EMBODIMENTS

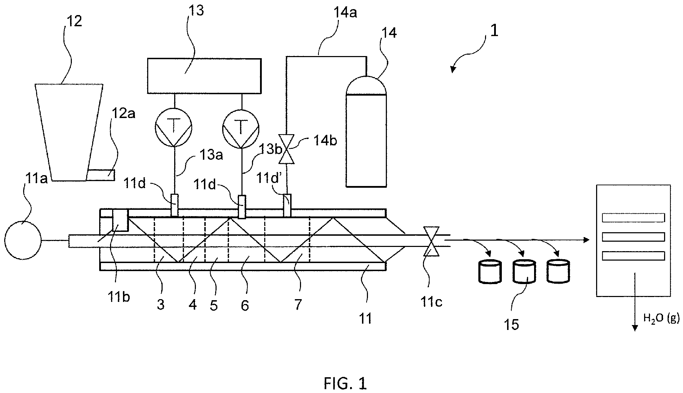

Figure 1 shows an exemplary embodiment of the process according to the invention. The process 1 is performed by using a twin-screw extruder 11. The twin-screw extruder comprises a motor 11a, an inlet 11b in which the respective material can be fed, an extruder exit 11c in form of a nozzle, eleven barrels (barrels 3 to 7 are indicated) with a diameter of 30 mm and diameter-to-length ratio of 44, and a variety of further inlets 11d and 11d' for adding further substances to the extruder. The temperature-controlled barrels are set to an operating temperature of 20°C. A powder composition comprising 92 wt.% of microfibrillated cellulose concentrate (containing 24 wt.% solids in water), 3 wt.% talc, 2wt.% ethanol, and 3 % egg white protein is added to a tank 12. Through an outlet 12a of the tank, the powder composition is continuously added to the extruder 11 at a mass flow rate of 3.5 to 4 kg/h via the respective inlet 11b and mixed by the screws of the twin-screw extruder 11. Through the inlets 11d at barrel 3 and 6, liquid is pumped into the extruder 11 from a liquid reservoir 13 at a mass flow rate of 8 to 8.5 kg/h. The liquid comprises water and 1% HPMC with a viscosity of approximately 400 mPas. The liquid is split into two streams 13a and 13b in approximately equivalents amounts. The addition of the liquids results in a viscous suspension of mainly fibrous material and a zero shear viscosity of approximately 10⁵ Pas. The suspension is conveyed towards the extruder exit 11c at a rotational speed of the extrusion screw of 40 U/min. A die at the extruder exit 11c with a diameter of below 1mm and above 250µm opposed a flow resistance, which results in an extrusion pressure of approximately 11 bar between barrel 5 and the extruder exit 11c. Further down in the process, carbon dioxide at a pre-pressure of minimum 20 bar is added from a gas reservoir 14 through pipe 14a into a further barrel 7 of the extruder via inlet 11d'. A control valve 14b allows adjustment of the flow rate of the carbon dioxide. The gas flow is approximately 40 g/h. The carbon dioxide is dispersed and dissolved in the suspension under pressure and acting shear flow between barrel 7 and extruder exit 11c. The carbon dioxide-suspension mixture is discharged from the extruder via the extruder exit 11c. The pressure drop to approximately 1 bar at the extruder exit 11c causes nucleation of gas bubbles and expansion of the foam, which can be casted into molds 15. The foamed product is released in an amount of 12 kg/h with a solid content of around 10 wt. %. The additives (talc, egg white protein, HPMC) in the solid fraction account for 25 wt. %. The gas volume in the foam is around 60 vol. %.

The casting in molds can be performed in a continuous process such as via conveyor belts. The molds with the foam can be placed into a microwave oven and dried using microwave-assisted convection drying.

It may be emphasized that the length of the extruder may vary, depending on the setup but has preferably a screw length L / screw diameter D ratio of L/D ≥ 12, more preferably L/D ≥ 20.

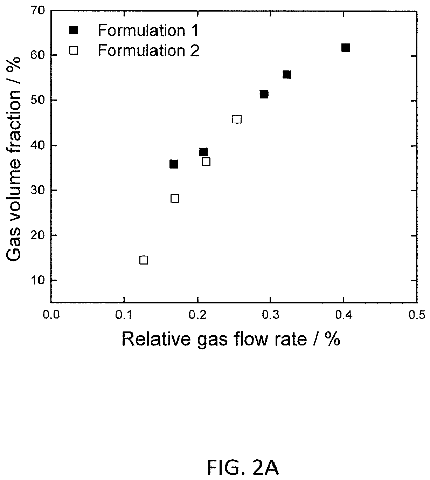

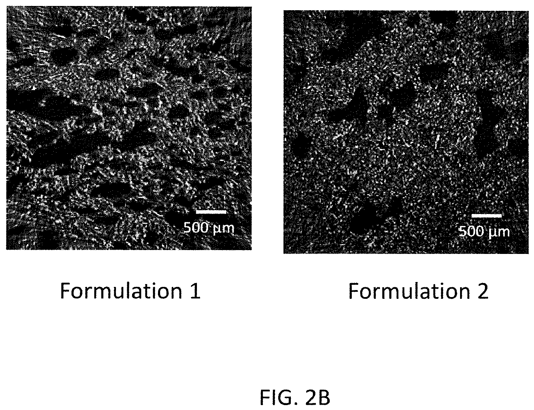

Figure 2A compares the gas volume fraction and pore distribution at different formulations. Formulation 1 consists of 7.2 wt.% MFC, 1 wt.% egg white protein, 0.8 wt.% hydroxy propylmethyl cellulose, 1 wt.% talc particles, 0.6 wt.% ethanol and 89.4 wt.% water. Formulation 2 consists of 9.4 wt.% MFC, 0.6 wt.% hydroxy propylmethyl cellulose and 90 wt.% water. The gas volume fraction can be adapted by controlling the gas flow rate relative to the flow rate of liquid and solid stream in the extruder. The gas volume fraction increases with increasing relative gas flow rate. Formulation 2 (MFC + thickening agent HPMC) shows pronounced blow-by of gas (= gas loss) when increasing the gas volume fraction over 45%. In contrast, formulation 1 containing MFC, HPMC, egg white protein, talc and ethanol shows improved foaming behavior, reaching a gas volume fraction of up to 62%. The addition of egg white protein, talc and ethanol leads to better stabilization of the foam bubbles, resulting in higher gas holding capacity and smaller and more homogeneously distributed bubbles, as revealed by a micro-computer tomograph of freeze-dried extruded foam as shown in figure 2B (tomographs acquired with synchrotron X-ray tomographic microscopy at the TOMCAT, beam-line X02DA of the Swiss Light Source, Paul Scherrer Institute (Switzerland) with max. spatial resolution of 100 nm. Projections were acquired over 180° at an X-ray energy of 10.25 keV and an exposure time of 150 ms.).

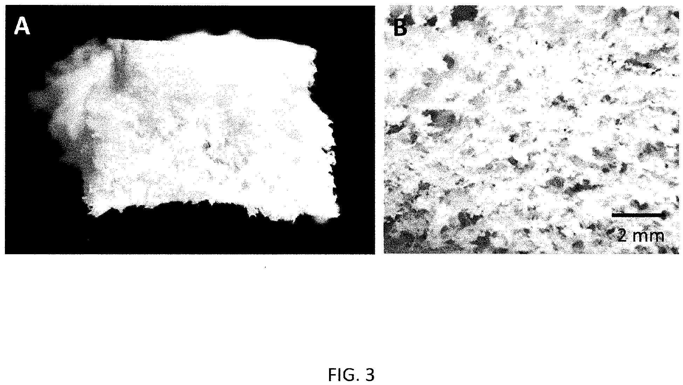

Figure 3 shows an extruded foam dried by microwave-convection drying with a bulk density of 0.108 g/cm³. The extruded foam consisting of 4 wt.% MFC, 0.8 wt.% HPMC, 1 wt.% talc particles, 2wt. % egg white protein, 0.6 wt.% ethanol and 91.6 wt.% water was foamed in the extruder to reach a gas volume fraction of 62%. The foam was extruded into cylindrical molds (142 mL) and dried by microwave-assisted convection drying at 100°C and 700 W microwave for 1 min followed by 100°C/500W for 30 min or until fully dried. The application of microwave prevented that the volume decrease during drying is proportional to the decrease in water content. This resulted in a highly porous solid with a porosity of >90% consisting of 51 wt.% MFC, 26 wt.% egg white protein, 13 wt.% talc particles and 10 wt.% hydroxy propylmethyl cellulose. Figure 3A shows the foam in a total perspective, figure 3B represents a zoom in perspective.

## Claims

1. Microfibrillated cellulose-loaded foam comprising microfibrillated cellulose, at least one thickening agent and/or at least one adhesive biopolymer.

2. Microfibrillated cellulose-loaded foam according to claim 1, wherein the foam is a heat-dried foam, in particular a microwave-assisted convection dried foam or a microwave-assisted vacuum dried foam.

3. Microfibrillated cellulose-loaded foam according to claim 1 or 2, wherein the dry foam has a density of between 0.05 and 0.35 g/cm³, preferably between 0.1 and 0.3 g/cm³ and most preferably between 0.15 and 0.25 g/cm³.

4. Microfibrillated cellulose-loaded foam according to one of the previous claims, wherein the thickening agent is chosen from the group consisting of cellulose derivative, protein, polysaccharide, polyvinyl alcohol or polyethylene glycol or combinations thereof, preferably hydroxy propyl cellulose, hydroxyl propyl methyl cellulose (HPMC) and/or polyethylene glycol (PEG).

5. Microfibrillated cellulose-loaded foam according to one of the previous claims, wherein the at least one biopolymer is a protein, preferably egg white protein

6. Microfibrillated cellulose-loaded foam according to one of the previous claims, wherein the foam comprises further additives chosen from the group consisting of: an adhesive, an adhesive hardener, a sizing agent, a mold resistant compound, a fiber decay resistant compound, a heat resistant compound, an electricity resistant compound, an acid resistant compound, a smoke resistant compound or combinations thereof.

7. Method for producing a wet microfibrillated cellulose-loaded foam, preferably a foam according to one of claims 1 to 6, comprising the steps of:
a) Providing a concentrate comprising microfibrillated cellulose,
b) Feeding the concentrate into a foaming apparatus (11),
c) Adding a liquid to the concentrate to obtain a suspension,
d) Agitating and pressurizing the suspension in the foaming apparatus (11),
e) Sparging a gas into the suspension,
f) Discharging the suspension through an outlet (11c) in the foaming apparatus (11) to obtain a microfibrillated cellulose-loaded foam,
wherein the microfibrillated cellulose-loaded foam additionally comprises a thickening agent and/or adhesive biopolymer.

8. Method according to claim 7, wherein the adhesive biopolymer is added to the concentrate before step b).

9. Method according to claim 7 or 8, wherein the thickening agent is added to concentrate together with the liquid in step c).

10. Method according to one of claims 7 to 9, wherein the liquid is added in split streams (13a, 13b), preferably in two or three split streams.

11. Method according to one of claims 7 to 10, wherein the gas in step e) is added in its sub- or supercritical state.

12. Method according to one of claims 7 to 11 further comprising the step of casting the foam into a mold (15).

13. Method according to claim 12, wherein the cellulose foam is heat-dried.

14. Method according to claim 13, wherein the heat drying is microwave-assisted convection drying or microwave-assisted vacuum drying.

15. Method according to one of claims 7 to 14, wherein the MFC in the concentrate has a fiber content in the range of 7 to 20 wt.%, preferably 7-14 wt.% and most preferably 8 to 10 wt.%.

16. Method according to one of claims 7 to 15, wherein further additives are added either in step a) and/or step c).

17. Use of a foam according to one of claims 1 to 6, preferably produced with a method according to one of claims 7 to 16, as an insulation material, packaging material or cushioning material.

18. Microfibrillated cellulose-loaded foam obtainable by a method according to one of claims 7 to 16.
